# NEUE EUROPÄISCHE PATENTSCHRIFT

(11) **EP 0 362 608 B2**
(45) Veröffentlichungstag und Bekanntmachung des Hinweises auf die Entscheidung über den Einspruch: **24.04.1996**
(45) Hinweis auf die Patenterteilung: 20.05.1992
(21) Anmeldenummer: 89117191.0
(22) Anmeldetag: 16.09.1989
(51) Int. Cl.: B60Q 7/02, B60Q 1/30

(54) **Lichtwarnvorrichtung**
Light-warning device
Dispositif d'alarme lumineux

(30) Priorität: 01.10.1988 DE 3833544
(43) Veröffentlichungstag der Anmeldung: 11.04.1990
(73) Patentinhaber: Dambach-Werke GmbH, D-76571 Gaggenau (DE)
(72) Erfinder: Killinger, Erich, Dr.-Ing., D-7560 Gaggenau (DE)
(74) Vertreter: Fleck, Hermann-Josef, Dr.-Ing.

(56) Entgegenhaltungen:
- DE-A- 2 437 580
- DE-A- 3 031 246
- DE-C- 3 434 341
- DE-U- 7 510 407
- DE-U- 7 812 922
- DE-U- 8 329 291
- FR-A- 2 505 749
- FR-A- 2 517 446
- FR-A- 2 573 896
- GB-A- 2 051 447
- US-A- 3 701 890
- Prospekt der Fa. ADB Aviation Lighting Systems, Luwensesteenweg 585, B-1930 Zaventeem, Belgien, "Follow me"(nach Angabe d. Einsprechenden 1 veröffentlicht Febr./87, ein Impressum mit Rückschluss auf das Veröffentlichunsdatum ist nicht erkennbar)
- Schreiben der Fa. Schott vom 07.10.86 zu einer Wechselanzeige "Follow me"
- Offenkundige Vorbenutzung gemäss technischen Blättern einschliesslich Fotos zu einer Vorrichtung "Follow Me Aufbau" der Einsprechenden 1
- "Richtlinien der Wechselverkehrszeichen an Bundesfernstrassen (RWVZ)" des Deutschen Bundesministers für Verkehr, aufgestellt von der Bundesanstalt für Strassenwesen, Ausg. Mai/84
- Datenkopie "Specialist Applications, fibre optic police vehicle signs", ohne Veröffentlichungsangaben, gem Einspr. II eine Datenblattkopie der Fa. Rank Optics Leeds
- Schreiben vom 19.06.92 von T. Clayforth der Firma Light Line Optical Fibres, Barnsley, South Yorkshire S75 1JL an die Einspr. II bezügl. der Richtigkeit der vorg. Datenkopie und der Daten (Bl. 17 d. Einspruchsakte)
- Katalog: Faseroptische Zeichengeber für die Verkehrstechnik, Fa. Pintsch Bamag, Dinslaken, Impressum 088 114 813 (1081)
- ADAC Motorwelt, Seiten 16-19, (veröffentl. Januar/88)
- Artikel der Fa. Fiber Optic, CH-8957 Spreitenbach "Fahrstreifen-Wechselsignale mit neuer Lichtleiter-Technologie" (datiert 04.09.87)
- Undatiertes Schreiben des Herrn B. Gregson der Fa. Eurotec an die Einspr. II bezüglich Lieferung an die "Nigerian police force"
- Kopien von zwei Fotografien bezügl. des vorgen. Schreibens, S.37 der Akte
- Seite aus einem Katalog der Fa. Premier Hazard, die gem. Schreiben vom 21.07.93 (an Eurotech) aus 1985/86 entstammen

## Beschreibung

Die Erfindung betrifft eine Lichtwarneinrichtung mit einer Warnleittafel zur Regelung des Straßenverkehrs gemäß Oberbegriff des Anspruchs 1.

Eine Lichtwarneinrichtung dieser Art ist durch die DE-A 30 31 246 bekannt. Bei dieser bekannten Lichtwarneinrichtung wird die gesamte Fläche der Anzeigeeinrichtung mit Lichtleitfasern ausgeleuchtet. Das Verkehrszeichen wird mittels einer Schablone erzeugt, die vor der Anzeigeeinrichtung angeordnet ist und Durchbrechungen aufweist, welche das gewünschte Verkehrszeichen darstellen. Bei einer Veränderung des Verkehrszeichens muß eine entsprechende Schablone vor der Anzeigeeinrichtung angeordnet werden. Eine Veränderung des Verkehrszeichens während der Fahrt ist daher nicht möglich.

Außerdem ist die auf dem Kofferraumdeckel oder dem Dach eines Personen-Kraftfahrzeuges angebrachte Lichtwarneinrichtung vom nachfolgenden Verkehr nicht unbeschränkt wahrnehmbar.

Die DE-A-2 437 580 offenbart eine Signalanzeigevorrichtung, bei der Lichtleitfaserbündel an ihren zusammengefaßten Enden durch je ein Glühlampensystem beleuchtet werden. Die freien lichtaustrittseitigen Enden sind matrixartig angeordnet und Zeichen zugeordnet, wobei eine Lampe das Zeichen voll darstellen kann.

Es ist Aufgabe der Erfindung, eine Lichtwarneinrichtung der eingangs erwähnten Art zu schaffen, die als Begleitfahrzeug für Schwerfasttransporte oder dgl. eingesetzt werden kann, wobei die Verkehrszeichen während der Fahrt leicht geändert und vom nachfolgenden Verkehr gut wahrgenommen werden können. Es soll auch der Optik und dem Fahrtwiderstand Rechnung getragen werden.

Diese Aufgabe wird nach der Erfindung durch die im Anspruch 1 angegebenen Merkmale gelöst.

Durch die Verwendung eines Kraftfahrzeuges mit bis zur Rückseite des Kraftfahrzeuges reichendem Dach, z.B. eines Kleintransporters, wird die Lichtwarneinrichtung so hochgestellt, daß sie von dem nachfolgenden Verkehr gut wahrnehmbar ist. Durch die Verwendung von verkehrszeichenindividuellen Lichtleitfaser-Bündeln können verschiedene Verkehrszeichen fest vorgegeben und allein durch die Anschaltung der zugeordneten Lichtquelle zur Anzeige gebracht werden. Die Verkehrszeichen können daher während der Fahrt schnell und leicht verändert werden. Dies kann in einfachster Weise vom Armaturenbrett aus erfolgen, wenn vorgesehen ist, daß im Bereich des Armaturenbrettes des Kraftfahrzeuges ein Bedienungstableau angebracht oder in dieses eingebaut ist, das Bedienungselemente zum Ein- und Ausschalten der Lichtwarneinrichtung sowie zum Einleiten der Anzeige der verschiedenen Verkehrszeichen aufweist.

Aus Gründen der Optik und des Fahrtwiderstandes ist dabei weiterhin vorgesehen, daß an der Dachständerkonstruktion der Gelenkachse des Trägers abgekehrt ein Spoiler angelenkt ist, der die auf das Dach abgeklappte Lichtleitfaser-Anzeigematrix sowohl in der Arbeits- als auch in der Abklappstellung abdeckt, wobei sich der Querschnitt zur Fahrzeugvorderseite hin jeweils verjüngt.

Der konstruktive Aufbau der Lichtleitfaser-Anzeigematrix ist nach einer Ausgestaltung so getroffen, daß die Lichtleitfaser-Anzeigematrix aus einer Lochrasterplatte mit lichtabgebenden Rasterpunkten besteht, die jeweils mit einem Ende einer Lichtleitfaser verbindbar sind, daß die Lichtleitfasern, die einem Verkehrszeichen oder einer Farbe des Verkehrszeichens zugeordnet sind, zu einem Lichtleitfaser-Bündel zusammengefaßt sind, das individuell beleuchtbar ist, und daß den Lichtleitfaser-Bündeln individuelle Lichtquellen und/oder Farbfilter zugeordnet sind.

Ist weiterhin vorgesehen, daß die Lichtleitfaser-Anzeigematrix in einem Gehäuse untergebracht ist, das an einer mit dem Kraftfahrzeug verbindbaren Dachständerkonstruktion quer zur Fahrzeugachse angelenkt und zur Fahrzeugvorderseite hin auf das Dach abklappbar ist, dann kann die Lichtleitfaser-Anzeigematrix auf einfachste Art in eine Ablagestellung gebracht werden, in der sie nicht mehr einsehbar ist.

Wenn das Kraftfahrzeug speziell als Begleitfahrzeug verwendet werden soll, ist eine Ausgestaltung von Vorteil, die dadurch gekennzeichnet ist, daß die Lichtleitfaser-Anzeigematrix mit der Dachständerkonstruktion und dem Spoiler fest mit dem Kraftfahrzeug verbunden ist und daß die Verbindungsleitungen fest im Kraftfahrzeug verlegt und fest geschaltet sind.

Die Erfindung wird anhand von in den Zeichnungen dargestellten Ausführungsbeispielen näher erläutert, Es zeigt:
Fig. 1 in perspektivischer Seitenansicht eine als Kraftfahrzeug ausgebildete Lichtwarnvorrichtung,
Fig. 2 das in Fig. 1 dargestellte Kraftfahrzeug in einer anderen perspektivischen Seitenansicht,
Fig. 3 eine Lochrasterplatte mit zwei Lichtleitfaser-Bündeln und zwei Lichtquellen zum Darstellen von zwei verschiedenen Verkehrszeichen,
Fig. 4 eine Lochrasterplatte mit zwei Lichtleitfaser-Bündeln und zwei Lichtquellen zum Darstellen eines zweifarbigen Verkehrszeichens,
Fig. 5 einen Teil einer Beleuchtungssäule in Rückansicht,
Fig. 6 eine Seitenansicht in Richtung des Pfeiles IV nach Fig. 5,
Fig. 7 einen Schnitt entlang der Linie A-A nach Fig. 5,
Fig. 8 eine weitere Lichtwarnvorrichtung mit einer Dachständerkonstruktion in perspektivischer Seitenansicht,
Fig. 9 und 10 ein Kraftfahrzeug in zwei verschiedenen perspektivischen Seitenansichten der Lichtwarnvorrichtung nach Fig. 8 und
Fig. 11 und 12 das in Fig. 9 und 10 dargestellte Kraftfahrzeug mit der Lichtwarnvorrichtung in der Ablagestellung.

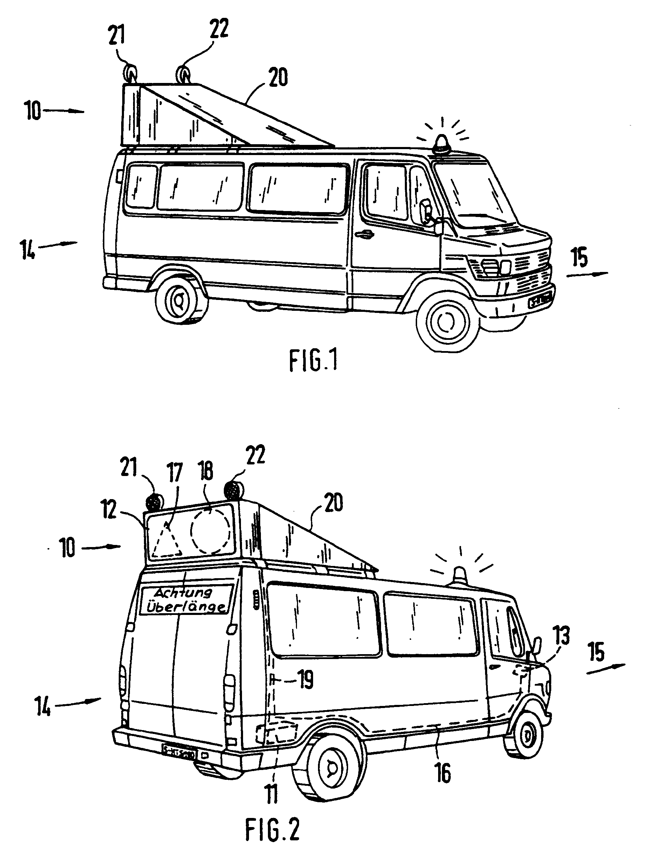

In den Fig. 1 und 2, die nicht mehr Bestandteil des vorliegenden Patents sind, ist eine Lichtwarnvorrichtung 10 mit einer Lichtleitfaser-Anzeigematrix 12 als zur Regelung des Straßenverkehrs dargestellt.

Die Lichtleitfaser-Anzeigematrix 12 ist auf der Rückseite eines in Fahrtrichtung 15 fahrenden Kraftfahrzeuges 14 in Vertikallage angeordnet und kann für den nachfolgenden Verkehr Verkehrszeichen 17 und 18 mittels steuerbarer Leuchtelemente darstellen. Die Lichtwarnvorrichtung 10 ist in einem Gehäuse 20 untergebracht, auf dessen oberen und waagrecht verlaufenden Kante zwei weitere Signalvorrichtungen 21 und 22 angeordnet sind.

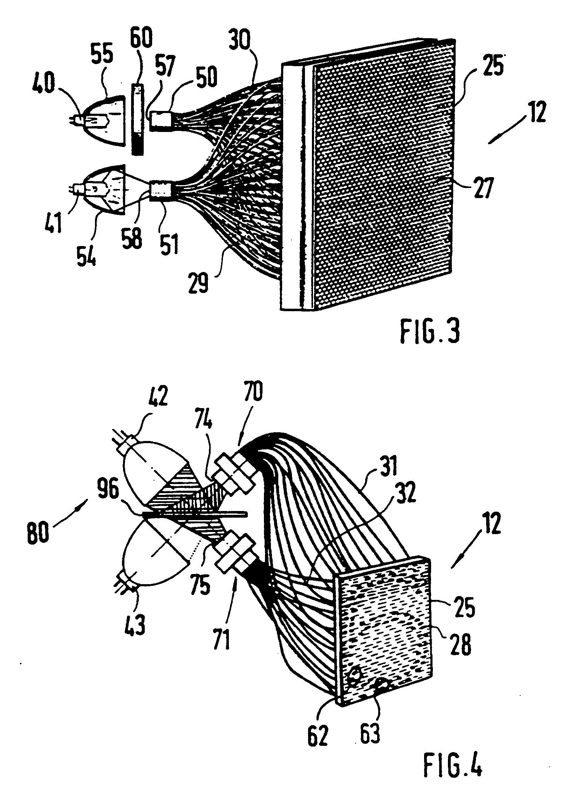

Wie die Fig. 3 und 4 zeigen, besteht die Lichtleitfaser-Anzeigematrix 12 aus einer Lochrasterplatte 25 (hier Matrix) mit lichtabgebenden Rasterpunkten 27 und 28, in denen die einen Enden von Lichtleitfasern 29 bis 32 angeordnet sind. Die anderen Enden der Lichtleitfasern 29 bis 32 werden von Lichtquellen 40 bis 43 (hier Halogenlampen) beleuchtet. Lichtleitfasern 29 und 30, die in der Lochrasterplatte 25 einem Verkehrszeichen zugeordnet sind, werden jeweils zu einem mehrarmigen Lichtleitfaser-Bündel 50 und 51 zusammengefaßt. Die Lichtquellen 40 und 41 befinden sich in jeweils einem Hohlspiegel 54 und 55, so daß das ausgestrahlte Licht direkt auf die Enden 57 und 58 der Lichtleitfaser-Bündel 50 und 51 fällt. Die Fig. 3 läßt erkennen, daß zwischen der Lichtquelle 40 und dem Ende 57 des Lichtleitfaser-Bündels 50 ein Lichtfilter 60 angeordnet ist.

Die Fig. 4 läßt erkennen, daß das auf der Lochrasterplatte dargestellte Symbol (hier die Ziffer 6), aus Zweiergruppen 62,63 von Rasterpunkten besteht, derart, daß der jeweils eine Rasterpunkt der Zweiergruppen 62 und 63 zu dem ersten Lichtleitfaser-Bündel 70 gehört, während der jeweils andere Rasterpunkt der Zweiergruppen 62 und 63 zu dem zweiten Lichtleitfaser-Bündel 71 gehört. Die beiden freien Enden 74 und 75 der Lichtleitfaser-Bündel 70 und 71 werden von den Lichtquellen 42 und 43 beleuchtet. In diesem Ausführungseispiel sind die beiden freien Enden 74 und 75 der Lichtleitfaser-Bündel 70 und 71 an eine Beleuchtungseinheit 80 angeschlossen, die aus den beiden Lichtquellen 42 und 43 besteht.

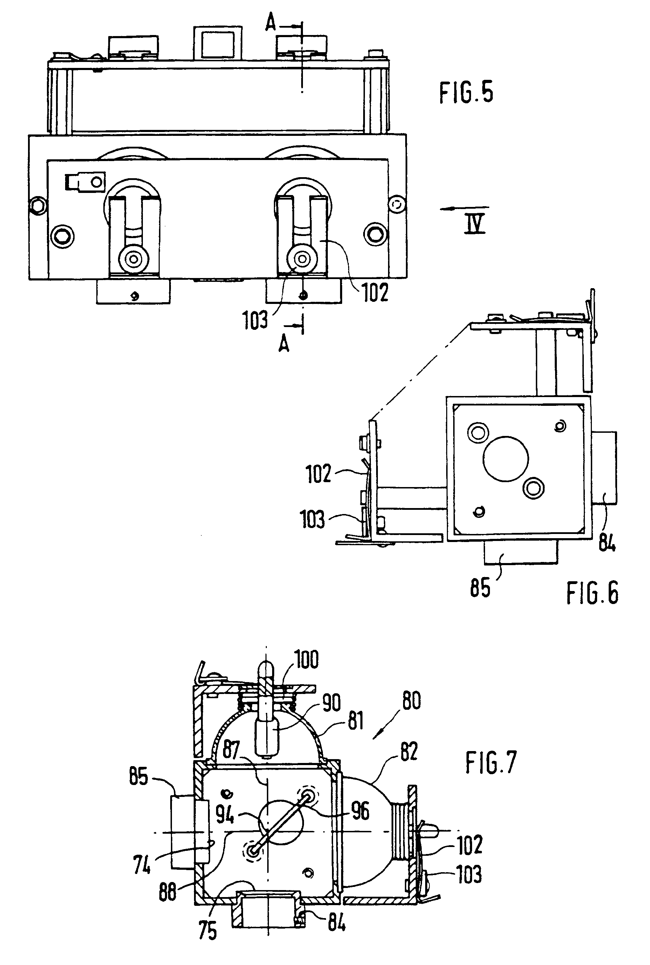

Wie die Fig. 5, 6 und 7 erkennen lassen, besteht die Beleuchtungseinheit 80 aus einem Gehäuse, in dessen Innenraum zwei Hohlspiegel 81 und 82 angeordnet sind und das mit Anschlußbuchsen 84 und 85 für die nicht näher dargestellten Lichtleitfaser-Bündel versehen ist.

Der Hohlspiegel 81 ist koaxial zu der Anschlußbuchse 84 angeordnet, während der Hohlspiegel 82 mit der Anschlußbuchse 85 koaxial verläuft. Die Achsen 87 und 88 der Hohlspiegel 81 bzw. 82 definieren eine gemeinsame Ebene und schneiden sich unter einem Winkel von 90°. Man erkennt, daß die Lichtquelle 90 eine Punktquelle ist, die jeweils im Brennpunkt des Hohlspiegels 81 bzw. 82 angeordnet sind.

Im Bereich des Schnittpunktes 94 der Achsen 87 und 88 ist ein halbdurchlässiger Spiegel 96 angeordnet, der zu der durch die beiden Achsen 87 und 88 definierten Ebene rechtwinklig angeordnet und von den Achsen 87 und 88 unter einem Winkel von 45° geschnitten wird. Durch den halbdurchlässigen Spiegel 96 gelangen jeweils 50 % des Lichtstromes der beiden Punktlichtquellen auf die Eintrittsflächen 74 und 75 der nicht näher dargestellten Lichtleitfaser-Bündel, die das Zeichen bilden. Bei Ausfall der einen Punktlichtquelle wird die andere Punktlichtquelle 90 eingeschaltet, die auf die gleiche Weise die beiden Lichtleitfaser-Bündel 70 und 71 beleuchten. Hierbei ist es möglich, die Anzeige mehrfarbig zu gestalten, derart, daß vor die Eintrittsfläche eines der beiden Lichtleitfaser-Bündel 74 und 75 ein entsprechendes Farbfilter gesetzt wird. Werden besonders hohe Lichtstärken benötigt, z.B. bei Nebel, dann kann die Zeichenhelligkeit verdoppelt werden, indem beide Punktlichtquellen gleichzeitig eingeschaltet werden.

Die Beleuchtungseinheit 80, wie sie in den Fig. 5, 6 und 7 dargestellt ist, kann zu einer Beleuchtungssäule zusammengefaßt werden, die dann im Gehäuse 20 angeordnet wird. Die Fig. 5, 6 und 7 lassen auch erkennen, daß die Punktlichtquellen 90 in Fassungen 100 angeordnet sind und von vorgespannten Federkörpern 102 gehalten werden. Die Federkörper 102 sind mittels Nieten 103 mit der Beleuchtungseinheit 80 verbunden.

Die Fig. 3 läßt erkennen, daß die Enden der Lichtleitfasern 29 und 39 in der Lochrasterplatte 25 so angeordnet sind, daß ein zweifarbiges Verkehrszeichen oder zwei verschiedene Verkehrszeichen darstellbar sind (vgl. auch Fig. 2). Die in die Lochrasterplatte 25 auslaufenden Enden der Lichtleitfasern 29, 30 bzw. 31 und 32 erweitern sich kegelförmig zu ihren Enden hin und sind in den einzelnen Löchern der Lochrasterplatte 25 versenkt angeordnet. Die Rasterpunkte 27 und 28 weisen einen Durchmesser von etwa 4 mm auf. In der Lochrasterplatte 25 sind die Lichtleitfasern 29, 30 bzw. 31, 32 mittels nicht näher dargestellter Spreizhülsen verbunden. Bei einem zweifarbigen Verkehrszeichen können die Lichtleitfasern 29 und 30 auf die ganze Lochrasterplatte 25 verteilt werden, während bei zwei verschiedenen Verkehrszeichen die Lichtleitfasern 29 und 30 auf abgeteilte Bereiche der Lochrasterplatte 25 verteilt sind.

Die in den Fig. 5, 6 und 7 dargestellten Beleuchtungseinheiten sind mit dem Gehäuse 20 schwingungsfrei und mit dem Innenraum des Kraftfahrzeuges über elektrische Verbindungsleitungen 16 und 19 verbunden. Von dort aus können die Beleuchtungseinheiten bzw. die Beleuchtungssäule gesteuert werden und zwar über das Bedienungstableau 13, das in das Armaturenbrett eingebaut sein kann. Die Versorgung kann über die Stromversorgung 11 des Kraftfahrzeuges 14 oder eine Zusatz-Stromversorgung erfolgen, die ebenfalls im Kraftfahrzeug 14 untergebracht ist. Die Verbindungsleitungen 16 und 19 verbinden das Bedienungstableau 13, die Stromversorgung 11 und die Lichtleitfaser-Anzeigematrix 12 untereinander. Die Lichtleitfaser-Anzeigematrix 12 kann fest mit dem Kraftfahrzeug 14 verbunden sein und auch die Verbindungsleitungen 16 und 19 können im Kraftfahrzeug 14 fest verlegt und angeschaltet sein (Fig. 2).

Selbstverständlich wäre es auch möglich, alle Rasterpunkte 27 und 28 der Lochrasterplatte 25 mit Lichtleitfasern zu bestücken und die anderen Enden so zusammenzufassen, daß sie gleichzeitig von derselben Punktlichtquelle bestrahlt werden. Stellt man nun zwischen die Punktlichtquelle und die freien Enden ein eine bestimmte Form und Eigenschaft besitzendes Filter, dann werden bestimmte Enden der Lichtleitfasern nicht bestrahlt, so daß nur ein Teil der Lichtleitfasern zu der Lochrasterplatte Licht leitet. Dies hat den Vorteil, daß durch die Auswahl bestimmter Filter das gewünschte Verkehrszeichen dargestellt werden kann. Selbstverständlich ist dann eine Lichtquelle mit einer entsprechenden Leistung erforderlich.

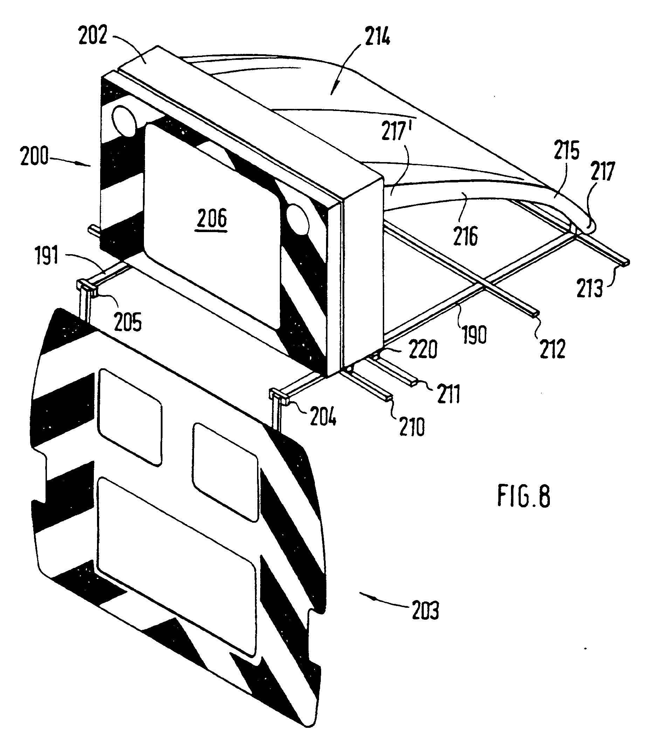

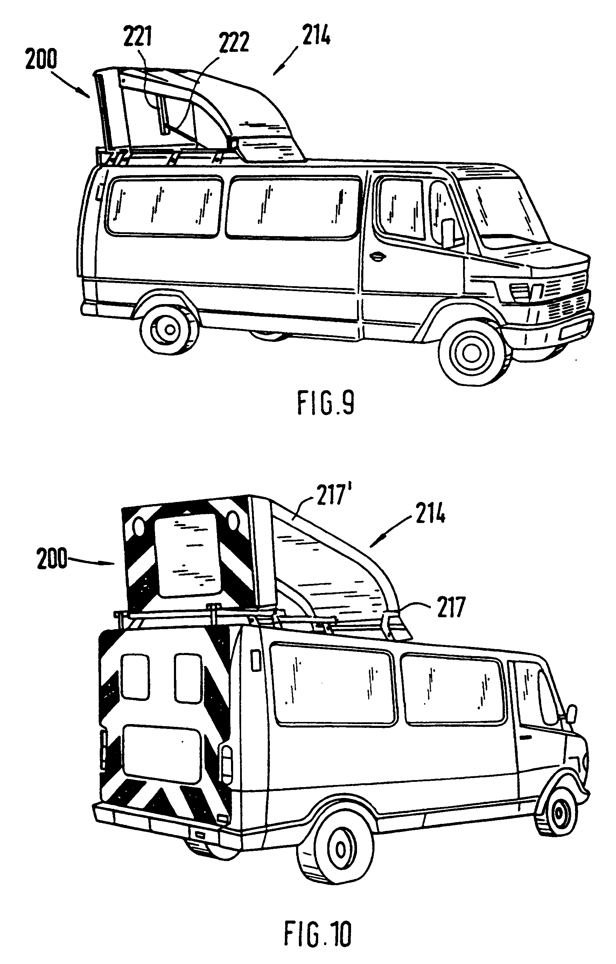

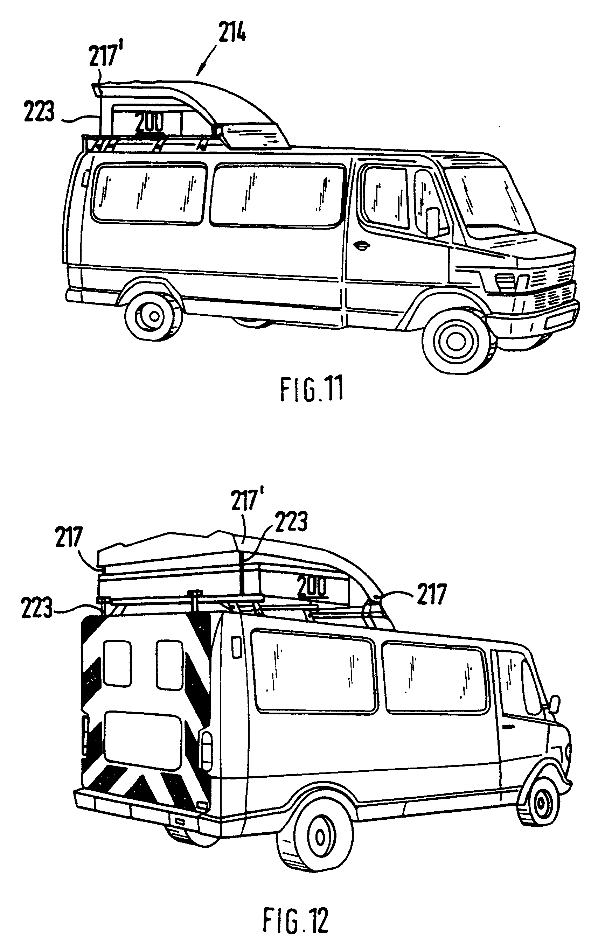

In Fig. 8 ist eine als Wechselverkehrszeichen ausgebildete Lichtwarnvorrichtung 200 dargestellt, die in einem Träger 202 angeordnet und von einer aus Streben 190, 191 und 210 bis 213 bestehenden Dachständerkonstruktion getragen ist. Diese Dachständerkonstruktion ist mit dem Dach des Kraftfahrzeuges lösbar verbindbar. Die Lichtwarnvorrichtung 200 ist mit einem Spoiler 214 verbunden. Sowohl der Spoiler 214 als auch die Lichtwarnvorrichtung 200 sind mit der Dachständerkonstruktion um die Gelenkachsen 217 und 220 gelenkig mit der Dachständerkonstruktion verbunden. Die Gelenkachse 220 ist so ausgebildet, daß die Lichtwarnvorrichtung 200 quer zur Fahrtrichtung des Kraftfahrzeuges 14 verschiebbar und hierbei feststellbar ist. Der Spoiler 214 hat einen etwa ebenen Abschnitt 216, der in einen bogenförmigen Abschnitt 215 übergeht. Die freien Enden der Streben 190 und 191 sind über Gelenke 204 und 205 mit einer Durchbrüche aufweisenden Platte 203 verbunden. Diese Platte deckt zumindest teilweise die Rückseite des Fahrzeuges ab (vgl. Fig. 10 und 12). Der die Verkehrsweichen darstellende Abschnitt 206 der Lichtwarnvorrichtung ist, was die Lichtabgabe betrifft, ähnlich oder genauso ausgebildet wie die in Fig. 3 und 4 dargestellte Lichtleitfaser-Anzeigematrix 12.

Der Spoiler 214 ist im Bereich der Stützstäbe 223 um die Gelenkachse 217 klappbar.

In den Fig. 9 und 10 ist die in Fig. 8 dargestellte Lichtwarnvorrichtung in der Arbeitsstellung. Zur Stabilisierung und Winkeleinstellung der Lichtwarnvorrichtung 200 ist ein Einstellstab 222 vorgesehen, dessen eines Ende mit der Dachständerkonstruktion gelenkig verbunden ist, während sein anderes Ende in einer vertikal verlaufenden Nut 221, die auf der Rückseite der Lichtwarnvorrichtung 200 ausgebildet ist, verstellbar ist.

Schließlich zeigen die Fig. 11 und 12 die Lichtwarnvorrichtung 200 in der Ablagestellung. Sie liegt mit ihrer Rückseite auf der Dachständerkonstruktion auf und ist vom Spoiler 214 abgedeckt. Für das Ein- und Ausfahren der Lichtwarnvorrichtung 200 ist ein nicht dargestellter Stellmotor vorgesehen, so daß der ganze Betrieb aus der Fahrerkabine des Kraftfahrzeuges 14 über das im Armaturenbrett eingebaute Bedienungstableau 13 erfolgen kann.

## Patentansprüche

1. Lichtwarneinrichtung mit einer Warnleittafel zur Regelung des Straßenverkehrs, die auf dem Dach eines Kraftfahrzeuges zur Rückseite des Kraftfahrzeuges hin gerichtet in Vertikallage mittels einer Dachständerkonstruktion und eines daran angelenkten Trägers angebracht und als steuerbare Lichtleitfaser-Anzeigeeinrichtung mit mehreren Anzeigen ausgebildet ist, die von der Stromversorgung des Kraftfahrzeuges oder einer im Kraftfahrzeug untergebrachten Zusatz-Stromversorgung gespeist oder speisbar ist, und die vom Kraftfahrzeug-Innenraum aus steuerbar ist,
dadurch gekennzeichnet,
daß sie auf dem bis zur Rückseite des Kraftfahrzeuges (14) durchgehenden Dach des Kraftfahrzeuges in dessen hinterem Bereich angebracht oder anbringbar ist,
daß die Lichtleitfaser-Anzeigeeinrichtung als Lichtleitfaser-Anzeigematrix (12) mit mehreren Lichtleitfaser-Bündeln (50,51) ausgebildet ist, die über individuelle Lichtquellen (40 bis 43) beleuchtbar sind,
daß die freien Enden der Lichtleitfasern der Lichtleitfaser-Bündel (50,51) in der Lichtleitfaser-Anzeigematrix (12) in den den verschiedenen Verkehrszeichen (17,18) entsprechenden Lagen angeordnet sind, und
daß an der Dachständerkonstruktion, der Gelenkachse des Trägers (202) abgekehrt, ein Spoiler (214) angelenkt ist, der die auf das Dach abgeklappte Lichtleiterfaser-Anzeigematrix (12) sowohl in der Arbeits-, als auch in der Abklappstellung abdeckt, wobei sich der Querschnitt zur Fahrzeugvorderseite hin jeweils verjüngt.

2. Lichtwarneinrichtung nach Anspruch 1,
dadurch gekennzeichnet,
daß im Bereich des Armaturenbrettes des Kraftfahrzeuges (14) ein Bedienungstableau (13) angebracht oder in dieses eingebaut ist, das Bedienungselemente zum Ein- und Ausschalten der Lichtwarneinrichtung (10) sowie zum Einleiten der Anzeige der verschiedenen Verkehrszeichen (17,18) aufweist.

3. Lichtwarneinrichtung nach Anspruch 1 oder 2,
dadurch gekennzeichnet,
daß die Lichtleitfaser-Anzeigematrix (12) aus einer Lochrasterplatte (25) mit lichtabgebenden Rasterpunkten (27,28) besteht, die jeweils mit einem Ende einer Lichtleitfaser (29,30; 31,32) verbindbar sind,
daß die Lichtleitfasern (29,30), die einem Verkehrszeichen oder einer Farbe des Verkehrszeichens zugeordnet sind, zu einem Lichtleitfaser-Bündel (50,51) zusammengefaßt sind, das individuell beleuchtbar ist, und
daß den Lichtleitfaser-Bündeln (50,51) individuelle Lichtquellen (40 bis 43) und/oder Farbfilter zugeordnet sind.

4. Lichtwarneinrichtung nach einem der Ansprüche 1 bis 3,
dadurch gekennzeichnet,
daß die Lichtleitfaser-Anzeigematrix (12) in einem Gehäuse (20) untergebracht ist, das an der mit dem Kraftfahrzeug (14) verbindbaren Dachständerkonstruktion quer zur Fahrzeugachse angelenkt und zur Fahrzeugvorderseite hin auf das Dach abklappbar ist.

5. Lichtwarneinrichtung nach einem der Ansprüche 1 bis 4,
dadurch gekennzeichnet,
daß die Lichtleitfaser-Anzeigematrix (12) mit der Dachständerkonstruktion und dem Spoiler (214) fest mit dem Kraftfahrzeug (14) verbunden ist, und
daß die Verbindungsleitungen (16,19) fest im Kraftfahrzeug (14) verlegt und fest geschaltet sind.

## Claims

1. Light-warning device having a warning notice-board for controlling road traffic, which device is mounted in a vertical position, by means of a roof-supported structure and a holder pivotally mounted thereon, on the roof of a motor vehicle so as to extend towards the rear end of the motor vehicle and is in the form of a controllable light-conducting fibre indicator, which is provided with a plurality of displays and is actuated, or is actuatable, by the power supply of the motor vehicle or by an additional power supply accommodated in the motor vehicle, and which device is controllable from the interior of the motor vehicle, characterised in that it is mounted, or mountable, on the roof of the motor vehicle, which extends to the rear end of the motor vehicle (14), in the rear region of said roof, in that the light-conducting fibre indicator is in the form of a light-conducting fibre display matrix (12) having a plurality of light-conducting fibre bundles (50, 51), which are illuminatable by means of individual light sources (40 to 43), in that the free ends of the light-conducting fibres of the light-conducting fibre bundles (50, 51) are disposed in the light-conducting fibre display matrix (12) in the positions corresponding to the various traffic signs (17, 18), and in that a spoiler (214) is pivotally mounted on the roof-supported structure remote from the pivot axis of the holder (202), which spoiler covers the light-conducting fibre display matrix (12), which is tilted downwardly onto the roof, both in the operational position and in the downwardly tilted position, the cross-section tapering towards the front end of the vehicle.

2. Light-warning device according to claim 1, characterised in that an operator's console (13) is mounted in the region of the instrument panel of the motor vehicle (14) or is incorporated therein, which console includes operating means for switching the light-warning device (10) on and off and for initiating the displays of the various traffic signs (17, 18).

3. Light-warning device according to claim 1 or 2, characterised in that the light-conducting fibre display matrix (12) comprises a perforate screen panel (25) provided with light-emitting screen dots (27, 28), which are each connectable to one respective end of a light-conducting fibre (29, 30; 31, 32), in that the light-conducting fibres (29, 30), which are associated with a traffic sign or a colour of the traffic sign, are combined to form a light-conducting fibre bundle (50, 51), which is illuminatable individually, and in that individual light sources (40 to 43) and/or colour filters are associated with the light-conducting fibre bundles (50, 51).

4. Light-warning device according to one of claims 1 to 3, characterised in that the light-conducting fibre display matrix (12) is accommodated in a housing (20), which is mounted on the roof-supported structure, connectable to the motor vehicle (14), so as to pivot transversely relative to the vehicle axis, and said housing is tiltable downwardly onto the roof in a direction towards the front end of the vehicle.

5. Light-warning device according to one of claims 1 to 4, characterised in that the light-conducting fibre display matrix (12) is securely connected to the motor vehicle (14) together with the roof-supported structure and the spoiler (214), and in that the connecting wires (16 to 19) are securely installed in the motor vehicle (14) and are firmly connected.

## Revendications

1. Dispositif d'alarme lumineux avec un panneau d'avertissement pour la régulation du trafic routier, panneau qui est, au moyen d'une charpente de toit et d'un support y articulé, monté en position verticale sur le toit d'un véhicule automobile et qui est dirigé vers l'arrière de ce véhicule et qui sous forme de dispositif d'affichage commandé à fibres optiques permet de reproduire différents signaux, le dispositif étant alimenté par le système de distribution électrique du véhicule automobile ou par un groupe électrogène auxiliaire installé dans le véhicule, la commande du panneau d'affichage se faisant à partir de l'intérieur du véhicule automobile, caractérisé
en ce qu'il est fixé sur ou peut être fixé sur le toit du véhicule automobile (14), toit qui se prolonge jusqu'à la face arrière du véhicule,
en ce que le dispositif d'affichage à fibres optiques a la forme d'une matrice d'affichage à fibres optiques (12) avec plusieurs faisceaux (50, 51) de fibres optiques, qui peuvent être éclairés par l'intermédiaire de sources lumineuses individuelles (40 à 43),
en ce que les extrémités libres des fibres optiques des faisceaux (50, 51) de fibres optiques sont disposées dans la matrice d'affichage (12) à des niveaux correspondant aux différents signaux routiers (17, 18) et
en ce que sur la charpente de toit, vis-à-vis de l'axe d'articulation du caisson (202), il est fixé à articulation un becquet (214), qui recouvre la matrice d'affichage à fibres optiques (12) située sur le toit tant dans la position de travail qu'également dans la position rabattue, becquet dont la section transversale va en diminuant en direction de la face avant du véhicule.

2. Dispositif d'alarme lumineux suivant la revendication 1,
caractérisé en ce qu'un tableau de commande (13) est prévu dans la région du tableau de bord du véhicule-automobile (14) ou est encastré dans le tableau de bord, tableau de commande (13) qui présente des éléments de commande pour la mise en marche ou la mise à l'arrêt du dispositif d'alarme lumineux (10) ainsi que pour amorcer l'affichage des différents signaux routiers (17, 18).

3. Dispositif d'alarme lumineux suivant l'une ou l'autre des revendications 1 ou 2,
caractérisé
en ce que la matrice d'affichage à fibres optiques (12) est constituée par une plaque-grille (25) avec des points de réseau (27, 28) émetteurs lumineux, points de réseau qui peuvent chacun être raccordés à une extrémité d'une fibre optique (29, 30; 31, 32),
en ce que les fibres optiques (29, 30) qui correspondent à un signal routier ou à une couleur du signal routier sont réunies en un faisceau (50, 51) de fibres optiques, qui peut être éclairé individuellement,et
en ce que des sources lumineuses individuelles (40 à 43) et/ou des filtres colorés individuels sont associés aux faisceaux de fibres optiques (50, 51).

4. Dispositif d'alarme lumineux suivant l'une quelconque des revendications de 1 à 3,
caractérisé en ce que
la matrice d'affichage à fibres optiques (12) est logée dans un caisson (20) qui est articulé transversalement à l'axe longitudinal du véhicule (14) sur une charpente de toit susceptible d'être montée sur le véhicule automobile et qui peut être rabattu sur le toit en direction de l'avant du véhicule.

5. Dispositif d'alarme lumineux suivant l'une quelconque des revendications de 1 à 4,
caractérisé
en ce que la matrice d'affichage à fibres optiques (12) avec la charpente de toit et avec le becquet (214) sont fixés rigidement sur le véhicule automobile (14) et
en ce que les conducteurs électriques de connexion (16, 19) sont montés de manière fixe dans le véhicule et sont connectés de manière permanente.
